## Europäisches Patentamt
## European Patent Office
## Office européen des brevets

(19)

(11) Publication number: **0 010 362**
**B1**

(12)

# EUROPEAN PATENT SPECIFICATION

(45) Date of publication of patent specification: **20.07.83**

(51) Int. Cl.³: **C 10 G 11/05, B 01 J 29/06**

(21) Application number: **79301960.5**

(22) Date of filing: **21.09.79**

(54) Cracking catalyst and use thereof with sulphur-containing feeds.

(30) Priority: **26.09.78 US 945967**

(43) Date of publication of application:
**30.04.80 Bulletin 80/9**

(45) Publication of the grant of the patent:
**20.07.83 Bulletin 83/29**

(84) Designated Contracting States:
**DE GB NL**

(56) References cited:
**FR - A - 2 335 582**
**US - A - 3 930 987**
**US - A - 3 966 643**
**US - A - 4 137 151**

(73) Proprietor: **MOBIL OIL CORPORATION**
**150 East 42nd Street**
**New York New York 10017 (US)**

(72) Inventor: **Chester, Arthur Warren**
**517 Country Club Drive**
**Cherry Hill, New Jersey 08003 (US)**
Inventor: **McVeigh, Harry Allen**
**13 Hillcrest Road**
**Belle Mead, New Jersey 08502 (US)**
Inventor: **Stover, William Albert**
**38 North Columbia Street**
**Woodbury, New Jersey 08096 (US)**

(74) Representative: **Cooper, John Anthony**
**CARPMAELS & RANSFORD 43 Bloomsbury Square**
**London WC1A 2RA (GB)**

Courier Press, Leamington Spa, England.

Cracking catalyst and use thereof with sulphur-containing feeds

This invention relates to a cracking catalyst and to its use in cracking sulphur-containing hydrocarbon feedstocks to reduce the emission of sulfur oxides ($SO_x$) in the regenerator stack gases.

In the regenerator of a catalytic cracking unit coke is burned off the catalyst to restore catalyst activity. The sulfur in the coke is converted to $SO_2$ and $SO_3$ ($SO_x$), the emission of which into the atmosphere must be minimised.

FR—A—2,335,582 proposes to control such emission by using, in combination with circulating cracking catalyst, a metallic reactant which reacts with sulphur oxides in the regeneration zone and a free or combined metallic promoter which enhances absorption of sulphur oxides by the reactant and the conversion of carbon monoxide to the dioxide in the regeneration zone.

There has now been discovered a cracking catalyst composition co-impregnated with a combination of a rare earth and with either chromium, manganese, cobalt or nickel. The starting composition is preferably a commercially manufactured material containing REY and REX crystalline aluminosilicate in a suitable matrix, such as the catalyst described in U.S. Specification 3,556,988. The new cracking catalyst can be employed in fluidized or moving bed catalytic cracking units well known to the art and their use therein results in lowering of the sulfur content in the coke deposits produced on the catalyst material and thus of the $SO_2$ and $SO_3$ ($SO_x$) content of the regenerator flue gas.

According to the invention, therefore, a cracking catalyst, comprising a composite of a rare earth exchanged crystalline aluminosilicate and a matrix which composite contains impregnated rare earth in an amount between 1 and 10 weight percent of its exchange capacity, is characterized by further containing, co-impregnated with said rare earth oxides between 0.05 and 5 weight percent (expressed as oxide) of chromium, manganese, cobalt or nickel.

The amount of the chromium, manganese, cobalt or nickel is usually between 0.1 and 2 weight percent (expressed as oxide). As for the balance of the composition, the amount of impregnated rare earth oxide is preferably between 1 and 5 weight percent of said exchange capacity, the crystalline aluminosilicate is preferably zeolite Y, and the matrix in a favoured embodiment comprises silica, clay and zirconia.

Suitable crystalline aluminosilicates, and their matrixing, are described in U.S. Specifications 3,140,249 and 3,140,253. Representative crystalline aluminosilicates suitable for the present invention include those natural and synthetic crystalline aluminosilicates having uniform pores of a diameter preferably between about 3 and 15 Angstrom units. Such crystalline aluminosilicates include zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), zeolite ZSM-5 (U.S. Patent 3,702,886), zeolite ZSM-11 (U.S. Patent 3,709,979) and zeolite ZSM-12 (U.S. Patent 3,832,449), synthetic mordenite, dealuminized synthetic mordenite merely to name a few, as well as naturally occurring zeolites including chabazite, faujasite, mordenite, and the like. Crystalline aluminosilicates having pore diameters between about 3 and 5 Angstrom units may be suitable for shape selective conversion catalysis, while crystalline aluminosilicates having pore diameter between about 6 and 15 Angstrom units are preferred by hydrocarbon conversion such as catalytic cracking and the like. Preferred crystalline aluminosilicates include the synthetic faujasite zeolites X and Y, with particular preference being accorded zeolite Y.

High catalytic activity may be imparted to the zeolite by base exchanging alkali metal aluminosilicate particles—either before or after dispersion thereof in the matrix—with a base-exchange solution containing ions selected from the group consisting of cations of elements of Groups IB—VII of the Periodic Table, hydrogen, and hydrogen precursors, including mixtures thereof with one another, in addition to rare earth exchange. Hydrogen precursors such as ammonia and ammonium salts, typically undergo, upon heating degradation to hydrogen cations in contact with aluminosilicates. Suitable methods of base exchange are described in the aforenoted U.S. Patents 3,140,249 and 3,140,253.

Where an alkali metal aluminosilicate is employed initially, it is essential to base exchange either the aluminosilicate particles before or after compositing with the matrix to reduce the sodium content of the final product to less than about 4% by weight and preferably less than 1% by weight. The sodium content of the final composite is essentially less than 1% by weight. Such compositions provide high catalytic activity when zeolite Y or zeolite X is the crystalline aluminosilicate component.

A wide variety of rare earth compounds can be employed with facility as a source of rare earth ion or impregnant. Operable compounds include rare earth chlorides, bromides, ioodides, carbonates, bicarbonates, sulfates, sulfides, thiocyanates, peroxysulfates, acetates, benzoates, citrates, nitrates, formates, propionates, butyrates, valerates, lactates, malanates, oxalates, palmitates, hydroxides, tartrates, and the like. The only limitation on the particular rare earth metal salt or salts employed is that it be sufficiently soluble in the fluid medium in which it is used to give the necessary rare earth ion transfer. The preferred rare earth salts are the chlorides, nitrates and sulfates: the technique of loading a catalyst with additional rare earth is fully described in our US—A—3,930,987.

Representative of the rare earth metals are cerium, lanthanum, praseodymium, neodymium, promethium, samarium europium, gadolinium, terbium, dysoprosium, holmium, erbium, thulium, scandium, yttrium, and lutecium.

The rare earth metal salts employed can either be the salt of a single rare earth metal or mixtures of rare earth metals, such as rare earth chlorides or didymium chlorides. As hereinafter referred to, a rare earth chloride solution is a mixture of rare earth chlorides consisting essentially of the chlorides of lanthanum, cerium, neodymium and praseodymium with minor amounts of samarium, gadolinium and yttrium. Rare earth chloride solutions are commerically available and the ones specifically referred to in the examples contain the chlorides of the rare earth mixture having the relative composition cerium (as $CeO_2$) 48% by weight, lanthanum (as $La_2O_3$) 24% by weight, praseodymium (as $Pr_6O_{11}$) 5% by weight, neodymium (as $Nd_2O_3$) 17% by weight, samarium (as $Sm_2O_3$) 3% by weight, gadolinium (as $Gd_2O_3$) 2% by weight, and other rare earth oxides 0.8% by weight. Didymium chloride is also a mixture of rare earth chlorides but having a lower cerium content. It consists of the following rare earths determined as oxides: lanthanum 45—56% by weight, cerium 1—2% by weight, praseodymium 9—10% by weight, neodymium 32—33% by weight, samarium 5—7% by weight, gadolinium 3—4% by weight, yttrium 0.4% by weight, and other rare earths 1—2% by weight. It is to be understood that other mixtures of rare earth are also applicable for the preparation of the novel compositions of this invention, although lanthanum, neodymium, praseodymium, samarium and gadolinium as well as mixtures of rare earth cations containing a predominant amount of one or more of the above cations are preferred since these metals provide optimum activity for hydrocarbon conversion, including catalytic cracking.

The base catalyst used in one preferred embodiment of the invention contains 10% REY in a silica-clay-zirconia matrix. It was found, in accord with the invention, that when a base catalyst is co-impregnated with a combination of rare earth oxide and with either $Cr_2O_3$, MnO, CoO or NiO, the sulfur content in coke produced during cracking is reduced by about 35—40%. The term "co-impregnated" is defined as impregnation of the rare earth and metals concurrently and not consecutively onto the base material.

In order to more fully illustrate the nature of the invention and the manner of practicing same, the following nonlimitative examples are offered.

Examples 1—7

The base catalyst (Example 1) used in these studies was a commercially manufactured catalyst containing 10% REY in a matrix consisting of 57% $SiO_2$, 2% $ZrO_2$ and 1% $Al_2O_3$ that had been post exchanged with rare earth chloride and contained 2.2 wt percent $RE_2O_3$. The method of manufacture has been detailed in U.S. Patent 3,556,988.

The base catalyst was impregnated with a solution containing both rare earth chloride and an additional metal salt. The impregnation was performed with a volume of solution just sufficient to fill the catalyst pores. The rare earth chloride ($RECl_3 \cdot 6H_2O$) had a rare earth distribution of 24% $La_2O_3$, 48% $CeO_2$, 5% $Pr_6O_{11}$, 17% $Nd_2O_3$, 3% $Sm_2O_3$, 2% $Gd_2O_3$, 0.2% $Y_2O_3$ and 0.8% other oxides. The catalysts prepared, the impregnating salts and relevant analysis are given in Table 1. After impregnation, each catalyst was dried in air for 16 hours at 250°F (121°C).

Each catalyst was subsequently steam-treated for 4 hours at 1400°F (760°C) with 100% steam at 0 psig (101.325 kPa) in a fluidized bed. The steam catalysts were used to crack a high-sulfur gas oil, the properties of which are given in Table 2, in a fixed fluidized bed at 920°F (493°C), 3 C/O, 8.3 WHSV.

The product distributions obtained are given in Table' 3. The percent sulfur in coke was determined by oxidizing the coke-containing spent catalyst in a stream of oxygen at about 1100°F (593°C) and passing the effluent gas through a 3% solution of hydrogen peroxide in water, thus converting $SO_2$ to $SO_3$ and absorbing all of the $SO_3$. The sulfate so formed was tritrated as sulfuric acid with Standard base (NaOH).

## TABLE 1

| Ex. no. | Metals impregnated | | Salts for impregnation | | $RE_2O_3$, % wt. | Metal or metal oxide content |
|---|---|---|---|---|---|---|
| 1 | Base | | — | — | 2.2 | 0 |
| 2 | $RE_2O_3$, | $Cr_2O_3$ | $RECl_3 \cdot 6H_2O$ | $Cr(NO_3)_3 \cdot 6H_2O$ | 3.4 | 0.28% $Cr_2O_3$ |
| 3 | $RE_2O_3$, | MnO | $RECl_3 \cdot 6H_2O$ | $MnCl_2 \cdot 4H_2O$ | 3.4 | 0.28% MnO |
| 4 | $RE_2O_3$, | MgO | $RECl_3 \cdot 6H_2O$ | $Mg(NO_3)_2 \cdot 6H_2O$ | 3.6 | 0.42% MgO |
| 5 | $RE_2O_3$, | CoO | $RECl_3 \cdot 6H_2O$ | $Co(NO_3)_2 \cdot 6H_2O$ | 3.6 | 0.2% CoO |
| 6 | $RE_2O_3$, | NiO | $RECl_3 \cdot 6H_2O$ | $Ni(NO_3)_2 \cdot 6H_2O$ | 3.4 | 0.125% NiO |
| 7 | $RE_2O_3$ | | $RECl_3 \cdot 6H_2O$ | | 3.5 | 0 |

### TABLE 2
#### High-sulfur gas oil

| | |
|---|---|
| Gravity, °API | 23.4 |
| Sulfur, % wt. | 2.08 |
| Nitrogen, % wt. | 0.10 |
| Basic N, % wt. | 0.035 |
| Conradson carbon, wt. % | 0.28 |
| Hydrogen, % wt. | 12.1 |
| MW | 332 |
| Aniline point, °F (°C) | 161 (71.6°) |
| Bromine No. | 6.0 |
| R.I. at 70°C | 1.4900 |
| Sp. Grav., 60°F (15.6°C) | 0.9172 |
| Paraffins, % wt. | 21.3 |
| Naphthenes, % wt. | 27.8 |
| Aromatics, % wt. | 50.9 |
| $C_A$ | 17.3 |

### TABLE 3

| Example no. | 1 | 2 | 3 | 4 | 5 | 6 | 7 |
|---|---|---|---|---|---|---|---|
| Impregnated metals | (Base) | $RE_2O_3$, $Cr_2O_3$ | $RE_2O_3$, MnO | $RE_2O_3$, MgO | $RE_2O_3$, CoO | $RE_2O_3$, NiO | $RE_2O_3$, |
| Conversion, % vol | 69.2 | 68.4 | 68.4 | 62.2 | 65.9 | 61.4 | 68.9 |
| $C_5^+$ gasoline, % vol | 58.3 | 59.6 | 57.4 | 56.0 | 58.7 | 50.6 | 59.2 |
| Total $C_4$'s, % vol | 11.5 | 11.5 | 9.6 | 9.3 | 9.5 | 8.3 | 12.7 |
| Dry gas, % wt | 6.8 | 6.0 | 5.4 | 5.2 | 5.5 | 6.0 | 6.4 |
| Coke, % wt. | 3.5 | 3.1 | 2.9 | 2.5 | 3.1 | 5.0 | 3.2 |
| Hydrogen, % wt. | 0.08 | 0.03 | 0.03 | 0.04 | 0.03 | 0.70 | 0.03 |
| $H_2S$, % wt. | 0.76 | 0.77 | 0.78 | 0.73 | 0.73 | 0.78 | 0.70 |
| % S in coke ($S/C \times 100$) | 3.9 | 1.8 | 1.9 | 2.0 | 2.4 | 2.1 | 2.8 |

Comparison of Example 1 with Example 2 shows that a substantial reduction of S in coke is obtained with a combination of $Cr_2O_3$ and rare earth. Thus, $SO_x$ emissions a substantial increase in gasoline yield. In the case of MnO (Example 3) or CoO (Example 5) combined with rare earth, reduction of $SO_x$ emissions are 60 and 45% respectively with little or no loss of gasoline yield. However, in both cases, catalyst stability is moderately reduced, as evidenced by the lower conversion after steaming.

Less desirable effects are observed for other metals. Thus, MgO (Example 4) reduces the S in coke, but this effect is accompanied by loss of stability. Nickel oxide (Example 6) also reduces S in coke, but substantially increases both hydrogen and coke yields.

It is to be noted that in all cases in which the S in coke is reduced, the $H_2S$ yield shows no increase, indicating that the S not incorporated in the coke remains in liquid products, probably the heavy cycle oil.

## Claims

1. A cracking catalyst, comprising a composite of a rare earth exchanged crystalline aluminosilicate and a matrix which composite contains impregnated rare earth oxide in an amount between 1 and 10 weight percent of its exchange capacity, characterized by further containing, co-impregnated with said rare earth oxide, between 0.05 and 5 weight percent (expressed as oxide) of chromium, manganese, cobalt or nickel.

2. A catalyst according to Claim 1 wherein the amount of chromium, manganese, cobalt or nickel is between 0.1 and 2 weight percent (expressed as oxide).

3. A catalyst according to either preceding claim wherein the amount of impregnated rare earth oxide is between 1 and 5 weight percent of said exchange capacity.

4. A catalyst according to any preceding claim wherein said crystalline aluminosilicate is zeolite Y.

5. A catalyst according to any preceding claim wherein said matrix comprises silica, clay and zirconia.

6. Use of the catalyst claimed in any preceding claim in a process for cracking a sulphur-containing hydrocarbon feedstock.

## Patentansprüche

1. Crackkatalysator, enthaltend ein Gemisch aus einem mit Seltenerden ausgetauschten

**0 010 362**

kristallinen Aluminosilicat und einem Matrixmaterial, wobei das Gemisch imprägniertes Seltenerdenoxid in einer Menge zwischen 1 und 10 Gew.-% seiner Austauschkapazität enthält, gekennzeichnet durch weiteren Gehalt, coimprägniert mit dem Seltenerdenoxid, zwischen 0,05 und 5 Gew.-% (ausgedrückt als Oxid) von Chrom, Mangan, Kobalt oder Nickel.

2. Katalysator nach Anspruch 1, dadurch gekennzeichnet, daß der Gehalt an Chrom, Mangan, Kobalt oder Nickel zwischen 0,1 und 2 Gew.-% (ausgedrückt als Oxid) liegt.

3. Katalysator nach einem der vorhergehenden Ansprüche, dadurch gekennzeichnet, daß die Menge an imprägniertem Seltenerdenoxid zwischen 1 und 5 Gew.-% der Austauschkapazität liegt.

4. Katalysator nach einem der vorhergehenden Ansprüche, dadurch gekennzeichnet, daß der kristalline aluminosilicat Zeolith Y ist.

5. Katalysator nach einem der vorhergehenden Ansprüche, dadurch gekennzeichnet, daß das Matrixmaterial Siliciumdioxid, Tonerde und/oder Zirkonoxid enthält.

6. Verwendung des Katalysators gemäß den vorhergehenden Ansprüchen in einem Verfahren zum Cracken eines schwefelhaltigen Kohlenwasserstoff-Einsatzmaterials.

**Revendications**

1. Catalyseur de craquage, comprenant un mélange d'un aluminosilicate cristallin ayant subi un échange d'ions avec des ions de terres rares et d'une matrice, ledit mélange contenant un oxyde de terres rares imprégné en quantité comprise entre 1 et 10% en poids de sa capacité d'échange, caractérisé en ce qu'il contient en outre entre 0,05 et 5% en poids de chrome, de manganèse, de cobalt ou de nickel (exprimés en oxydes) coimprégnés avec ledit oxyde de terres rares.

2. Catalyseur selon la revendication 1, caractérisé en ce que la quantité de chrome, manganèse, cobalt ou nickel est comprise entre 0,1 et 2% en poids (exprimée en oxydes).

3. Catalyseur selon l'une quelconque des revendications précédentes, caractérisé en ce que la quantité d'oxyde de terres rares imprégné est comprise entre 1 et 5% en poids de ladite capacité d'échange.

4. Catalyseur selon l'une quelconque des revendications précédentes, caractérisé en ce que ledit aluminosilicate cristallin est la zéolite Y.

5. Catalyseur selon l'une quelconque des revendications précédentes, caractérisé en ce que ladite matrice comprend de la silice, de l'argile et de l'oxyde de zirconium.

6. Utilisation du catalyseur selon l'une quelconque des revendications précédentes, dans un procédé pour le craquage d'une charge d'alimentation d'hydrocarbure contenant du soufre.